(19) Europäisches Patentamt
European Patent Office
Office européen des brevets

(11) Numéro de publication : **0 426 514 B1**

(12) # FASCICULE DE BREVET EUROPEEN

(45) Date de publication du fascicule du brevet : **15.09.93 Bulletin 93/37**

(51) Int. Cl.$^5$ : **G01V 1/36**, G01V 1/28

(21) Numéro de dépôt : **90402771.1**

(22) Date de dépôt : **05.10.90**

(54) **Procédé de prospection sismique marine.**

(30) Priorité : **30.10.89 FR 8914207**

(43) Date de publication de la demande : **08.05.91 Bulletin 91/19**

(45) Mention de la délivrance du brevet : **15.09.93 Bulletin 93/37**

(84) Etats contractants désignés : **BE DE GB IT NL**

(56) Documents cités :
**FR-A- 2 245 961**
**US-A- 3 159 231**
**GEOPHYSICS, vol. 51, no. 12, décembre 1986, pages 2177-2184, Society of Exploration Geophysicists; J.R. BERRYHILL et al.: "Deep-water peg legs and multiples: Emulation and suppression"**

(73) Titulaire : **TOTAL COMPAGNIE FRANCAISE DES PETROLES Société Anonyme**
**5, rue Michel Ange**
**F-75781 Paris Cédex 16 (FR)**

(72) Inventeur : **Julien, Philippe**
**54, rue Hoche**
**F-78800 Houilles (FR)**
Inventeur : **Raoult, Jean-Jacques**
**77, Avenue Félix Faure**
**F-92000 Nanterre (FR)**

(74) Mandataire : **Jolly, Jean-Pierre et al**
**Cabinet Jolly 54, rue de Clichy**
**F-75009 Paris (FR)**

EP 0 426 514 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne la prospection sismique marine. Elle a plus particulièrement pour objet un procédé perfectionné de prospection sismique marine, dans lequel l'interprétation des données, c'est-à-dire des résultats enregistrés après des tirs, est améliorée par élimination des données parasites du type des "multiples du fond de l'eau" ou encore de ce que l'on appelle, dans la technique, des "peg legs". Ces termes seront définis dans la suite de la présente description.

On sait qu'une technique répandue de recherche de pétrole ou de gaz consiste à effectuer une prospection sismique du sous-sol. En sismique terrestre, à partir d'un point de la surface du sol, on émet des ondes sismiques, en provoquant par exemple l'explosion d'une charge puissante, et l'on recueille en différents points de la surface, à l'aide de détecteurs dits géophones, les ondes acoustiques réfléchies par les interfaces ou "horizons" entre couches géologiques. Ces détecteurs convertissent en signaux électriques les ondes réfléchies et ils sont disposés de façon telle et en nombre suffisant pour que les signaux enregistrés permettent de reconstituer la configuration des couches géologiques. Dans la pratique, le signal enregistré par un géophone présente une amplitude qui varie constamment en fonction du temps et les pics enregistrés correspondent normalement à des horizons entre couches.

En réalité, l'interprétation des données d'un tir est beaucoup plus complexe, car, d'une part, les ondes peuvent traverser une première interface entre couches, pour se réfléchir sur l'interface suivante, puis sur la première interface et ainsi de suite avant de parvenir au géophone; d'autre part, l'amplitude des enregistrements diminue très rapidement en fonction du temps. Les enregistrements comportent donc des pics correspondant à des réflexions multiples qu'il convient d'éliminer pour reconstituer correctement la configuration du sous-sol.

Une technique analogue est utilisée pour la prospection sismique marine, le tir d'une charge explosive étant effectué dans ce cas à quelques mètres sous la surface de l'eau et les récepteurs ou "hydrophones" étant eux-mêmes disposés à la même profondeur. Dans cette méthode de prospection, les inconvénients rappelés ci-dessus sont toutefois amplifiés par le fait que le fond marin est hautement réflecteur, de même que l'interface eau-air. Une onde sismique se réfléchira donc successivement sur ces deux interfaces en donnant naissance, sur les hydrophones, à des signaux parasites correspondant aux réflexions multiples de la couche d'eau.

Les réflexions multiples peuvent être de différents types et la présente invention s'intéresse plus particulièrement aux réflexions multiples du fond de l'eau, pour lesquelles l'onde sismique ne pénètre pas dans les formations géologiques mais se réfléchit sur le fond marin, et aux "peg-legs", pour lesquels l'onde pénètre dans les formations sous-terraines puis se réfléchit sur une interface, avant de traverser l'eau à nouveau et de rebondir dans cette couche d'eau.

Ces deux types de réflexion sont illustrés de façon schématique sur les figures 1 et 2 des dessins annexés, sur lesquels :

la figure 1 illustre la formation d'un multiple de fond de l'eau ;

la figure 2 illustre la formation d'un peg leg ;

les figures 3a, 3b et 3c illustrent la mise en oeuvre de l'invention dans un cas pratique (Exemple 1);

les figures 4a et 4b illustrent une autre forme de mise en oeuvre de l'invention (Exemple 2).

Comme on le voit sur la figure 1, une explosion d'une charge en un point A situé près de la surface S de l'eau peut donner naissance à une onde O qui se réfléchit contre le fond de l'eau F, puis contre l'interface air-eau à la surface S et à nouveau contre le fond de l'eau F, avant de parvenir à l'hydrophone disposé au point H situé près de la surface de l'eau. Le signal qu'enregistrera le récepteur ne sera donc représentatif ni du fond de l'eau, ni de l'interface de deux couches géologiques, mais d'une réflexion multiple du fond de l'eau.

Dans le cas de la figure 2, l'onde O traverse le fond F pour pénétrer dans une formation géologique sous-jacente, puis se réfléchit à l'interface I séparant cette formation de la couche suivante. L'onde réfléchie traverse le fond F pour revenir dans la couche d'eau. Elle se réfléchit à nouveau contre la surface S puis contre le fond F avant de parvenir à l'hydrophone H, qui enregistre un signal correspondant au trajet parcouru par l'onde O. Ce trajet a le profil représenté sur la figure 2 et, à cause de sa forme dissymétrique, on le désigne familièrement en anglais de la technique, par l'expression "peg leg", c'est-à-dire "jambe de bois".

Des signaux cohérents, représentatifs des multiples du fond de l'eau et des peg legs, se retrouvent par conséquent sur les enregistrements effectués par les géophones, mais ils sont totalement dépourvus d'intérêt pour la connaissance du sous-sol. Qui plus est, ils peuvent se superposer à des réflexions primaires et donc masquer une information utile. Il convient donc de les éliminer des données obtenues à l'issue des tirs, pour obtenir un enregistrement représentatif des seules formations géologiques.

Un but de la présente invention est donc, dans un procédé de prospection sismique marine du type rappelé ci-dessus d'éliminer au moins partiellement les signaux parasites correspondant aux multiples du fond de l'eau et aux "peg legs" dans les enregistrements effectués par des capteurs lors d'un tir de prospection.

Un autre but de l'invention est de proposer un procédé de ce type dans lequel l'élimination des enregistrements effectués par les capteurs des signaux correspondant aux multiples du fond de l'eau et aux "peg legs" n'entraîne pas un accroissement du bruit de fond des enregistrements ou une atténuation des signaux primaires, que l'on cherche au contraire à isoler des signaux parasites.

On a déjà proposé des procédés de ce type dans lesquels l'élimination des signaux multiples s'effectue soit par un filtrage dans un certain domaine, soit par un filtrage par déconvolution prédictive.

La première méthode est fondée sur la différence de vitesse entre les signaux multiples et les signaux primaires. Si l'on considère un multiple et un primaire à un temps t donné, la vitesse du multiple étant plus faible, les signaux du multiple enregistrés par des capteurs de plus en plus éloignés du point de tir se répartiront suivant une hyperbole de courbure plus prononcée que celle des signaux primaires et il sera ainsi possible d'effectuer la ségrégation des multiples.

Le principal problème de cette méthode réside dans la différence de vitesse entre multiples et primaires. En effet, si la loi de vitesse des multiples est proche de celle des primaires, les courbures des hyperboles seront semblables, voire identiques pour les capteurs proches de la source. Des informations sur les primaires pourront être effacées, ou bien les multiples ne seront pas correctement supprimés.

Le filtrage par déconvolution prédictive utilise, lui, le caractère répétitif des réflexions multiples. Le filtre généralement utilisé est le filtre prédictif de Wienner-Levinson. En effet, l'arrivée d'une réflexion multiple peut être prévue et éliminée.

Les problèmes liés à ces méthodes sont d'autant plus difficiles à résoudre que la zone de travail est complexe, par exemple à proximité d'un dôme de sel.

La présente invention vise à remédier à ces inconvénients. Le procédé proposé s'applique directement sur les points de tir. Il est valable même si les vitesses apparentes des multiples et des primaires sont identiques.

Ce procédé est fondé sur le principe dit de la modélisation et soustraction, selon lequel, à partir des données brutes obtenues aux points de tir, on élabore par l'équation des ondes un modèle mathématique des multiples, que l'on soustrait ensuite de ces données brutes.

La soustraction des multiples modélisés aux données brutes ne peut être réalisée directement. En effet, la modélisation n'étant pas parfaite, les multiples modélisés présentent des différences d'amplitudes et des déphasages avec les données réelles. Ces imperfections sont liées aux faits que la topographie du fond de l'eau est mal connue, que l'équation d'onde utilisée donne une description imparfaite de la réalité et que les coefficients de réflexion sont inconnus.

La méthode de base décrite par Berryhill et Kim pour adapter les multiples modélisés ("Deep-water peg legs and multiples : emulation and suppression", Geophysics, Vol 51, N°12, p.2177, 1986) consiste à diviser les traces sismiques en segments. Ces segments sont d'abord corrélés avec les segments équivalents des données modélisées, afin de définir une correction en temps, puis une fonction de transfert est déterminée dans le domaine fréquentiel entre les données modélisées et les données réelles, pour égaliser les amplitudes.

Cette méthode présente un inconvénient majeur, lorsque les données sont bruitées. En effet, dans ce cas, le bruit présent sur les traces modélisées et situé en face des primaires est augmenté par la fonction de transfert. Ceci signifie que, non seulement les multiples sont atténués, mais aussi les primaires.

Pour remédier à cet inconvénient, FR-A-2 245 961 a proposé d'appliquer des corrections d'amplitude et de temps à une première estimation des signaux de réflexion multiple et à soustraire les estimations ainsi corrigées des traces sismiques enregistrées.

La présente invention vise, elle aussi, à éliminer les multiples sans altérer les signaux correspondant aux primaires, et, dans ce but, elle propose de corriger à l'aide de fonctions de transfert dépendant du temps et de la distance au point de tir le modèle mathématique des multiples élaboré par des techniques classiques.

L'invention a par conséquent pour objet un procédé de

$$C(t,x) = (1, t, t^2, \ldots, t^n) \begin{pmatrix} C_{1,1} & C_{1,2} & C_{1,3} & \cdot & \cdot & C_{1,m} \\ C_{2,1} & C_{2,2} & \cdot & \cdot & \cdot & \cdot \\ C_{3,1} & \cdot & \cdot & \cdot & \cdot & \cdot \\ \cdot & \cdot & \cdot & \cdot & \cdot & \cdot \\ \cdot & \cdot & \cdot & \cdot & \cdot & \cdot \\ C_{n,1} & \cdot & \cdot & \cdot & \cdot & C_{n,m} \end{pmatrix} \begin{pmatrix} 1 \\ x \\ x^2 \\ \cdot \\ \cdot \\ x^m \end{pmatrix}$$

soit

$$C(t,x) = \sum_{i=1}^{n+1} \sum_{j=1}^{m+1} C_{i,j} t^{i-1} x^{j-1}.$$

prospection sismique marine, du type dans lequel on émet une onde sismique en un point déterminé près de la surface de l'eau et l'on enregistre en fonction du temps les ondes réfléchies par les interfaces entre formations géologiques du sous-sol, à l'aide de récepteurs disposés en une pluralité d'emplacements près de la surface de l'eau, on réalise à l'aide de moyens d'un type connu utilisant l'équation des ondes un modèle mathématique M(t,x) des signaux multiples et des peg legs, on applique des modifications d'amplitude et de temps aux données ainsi calculées et on soustrait des données enregistrées pour chacun des capteurs les données calculées ainsi modifiées pour obtenir des données corrigées et l'on établit à l'aide de ces données corrigées une représentation graphique des formations géologiques du sous sol dans lesquelles s'est propagée ladite onde sismique, ce procédé étant caractérisé en ce que, pour appliquer des modifications d'amplitude et de temps aux données calculée, on applique à celles-ci des fonctions de transfert polynomiales C(t,x) tenant compte du temps t écoulé depuis l'émission de l'onde sismique et de la distance x du capteur à la source sismique, en vue d'adapter en phase et en amplitude les données calculées aux données enregistrées, pour obtenir des données modélisées adaptées $M_{adapt}$ (t,x), qui sont soustraites des données enregistrées P (t,x) pour conduire à un résidu

$$R(t,x) = P(t,x) - M_{adap}t(t,x)$$

les coefficients des fonctions de transfert étant calculés afin de minimiser, au sens des moindres carrés ou des moindres valeurs absolues, la somme sur les temps t et sur les distances x du carré ou de la valeur absolue de R(t,x).

Plus précisément, les fonctions de transfert seront des fonctions du temps (t) et de la distance au point de tir (x) du type :

Si l'on appelle P(t,x) , les données observées sur un point de tir, M(t,x) les réflexions multiples modélisées correspondantes, A(t,x) la fonction de transfert relative à l'amplitude du signal et B(t,x) la fonction de transfert relative à la phase du signal, l'adaptation des données modélisées M(t,x) en un point (t,x) s'écrira :

$$M_{adapt}(t,x) = I[(M(B(t,x),x))] \times A(t,x).$$

En fait, l'adaptation en phase nécessite une réinterpolation des traces considérées. La fonction B(t,x) donne de nouvelles positions absolues de chacune des valeurs (amplitudes) pour chaque trace. Il faut donc rééchantillonner les traces avec un pas constant, c'est-à-dire faire une interpolation, représentée ici par l'opérateur I.

Au point (t,x) un résidu correspondant à la différence entre les données observées P(t,x) et les données modélisées adaptées pourra être calculé :

$$R(t,x) = P(t,x) - [I(M(B(t,x),x)) \times A(t,x)]$$

soit

$$R(t,x) = P(t,x) - M_{adapt}(t,x).$$

Les coefficients aij et bij des fonctions de transfert A(t,x) et B(t,x) sont déterminés au mieux, afin de minimiser, au sens des moindres carrés ou des moindres valeurs absolues, la somme Res sur les temps t et sur les distances x du carré ou de la valeur absolue de R(t,x) :

soit

$$Res = \sum_{t=1}^{T} \sum_{x=1}^{X} [R(t,x)]^2$$

ou:

$$Res = \sum_{t=1}^{T} \sum_{x=1}^{X} |R(t,x)| .$$

Dans une forme de mise en oeuvre préférée de l'invention, on substituera aux polynômes C(t,x) définis ci-dessus des polynômes C'(t,x) définis à partir des polynômes de TCHEBYCHEFF $T_i(t)$ et $T_i(x)$ :

$$C'(t,x) = (T_0(t), T_1(t), \ldots, T_n(t)) \begin{pmatrix} C_{1,1} & C_{1,2} & . & . & C_{1,m} \\ C_{2,1} & C_{\cdot,2} & . & . & . \\ . & . & . & . & . \\ . & . & . & . & . \\ C_{n,1} & . & . & . & C_{n,m} \end{pmatrix} \begin{pmatrix} T_0(x) \\ T_1(x) \\ . \\ . \\ T_m(x) \end{pmatrix}$$

En effet, avec C(t,x), tous les zéros de ce polynôme ne sont pas contenus dans l'intervalle d'étude en t et en x, et pour des polynômes de degré élevé, des problèmes de grandeur numérique peuvent se présenter lorsque les valeurs de t sont élevées.

Le problème est éliminé avec les polynômes de Tchebycheff, $T_i(t)$ et $T_i(x)$, et l'on peut prouver que ceux-ci peuvent se calculer par la relation de récurence :

$$T_{n+1}(x) - 2x\,T_n(x) + T_{n-1}(x) = 0,$$

soit , avec, pour l'initialiser :

$$T_0(x) = 1 , T_1(x) = x , T_2(x) = 2x^2 - 1 , T_3(x) = 4x^3 - 3x...$$

Tous les zéros des polynômes de TCHEBYCHEFF sont compris dans l'intervalle [-1,+1], ce qui est très important, car, en ramenant les variables t et x dans l'intervalle [-1,+1] on peut calculer des fonctions de transfert dont toutes les variations seront prises en compte.

Avantageusement, on pourra donner davantage de poids aux multiples dans la fonction R(t,x) à minimiser. Dans ce but, en un point (t,x), le résidu à prendre en considération sera

$$R_p(t,x) = R(t,x) \times [env(M(t,x))]^2$$

où l'opérateur env (         ) est l'enveloppe des traces en temps M(t,x) pour chaque valeur de x.

La fonction à minimiser sera alors

$$Res_p = \sum_{t} \sum_{x} |R_p(t,x)| \quad (norme \quad L1)$$

ou :

$$Res_p = \sum_{t} \sum_{x} [R_p(t,x)]^2 \quad (norme \quad L2) .$$

La fonction à minimiser n'est pas linéaire et, par conséquent, une procédure d'optimisation peut converger ou non vers un minimum absolu du résidu. Pour assurer une convergence correcte du processus vers le minimum absolu du résidu, il est préférable d'initialiser la méthode d'optimisation avec une solution aussi proche que possible de la solution finale .

Les résultats que l'on obtient en appliquant le programme tel qu'il est décrit, sur un point de tir dans sa

globalité, sont bons, mais ne sont pas entièrement satisfaisants, car le temps de calcul est grand et il reste des faibles résidus de multiples.

Ce problème peut être résolu en découpant le point de tir en fenêtres en temps et en distance et en appliquant la méthode précédente sur chacune des fenêtres. Ceci réduit le temps de calcul diminuant le degré des polynômes de Tchebycheff et améliore très nettement la qualité du résultat.

Les exemples suivants illustrent des formes de mise en oeuvre de l'invention.

EXEMPLE 1

Dans cet exemple, on a utilisé des données synthétiques, obtenues en utilisant un réflecteur horizontal, avec un coefficient de réflexion de 0,5 , et une vitesse d'onde de 1500 m/s. Deux réflexions multiples ont été engendrées.

Pour l'élimination de ces multiples, après modélisation de ceux-ci, on a utilisé des polynômes de TCHEBYCHEFF de degré 5 en t et 5 en x pour l'amplitude, et de degré 3 en t et 3 en x pour la phase. Après une recherche systématique, la valeur initiale du résidu était de 1,63e-4, avec pour les coefficients principaux, $a_{11}$ = 0,49 , $b_{11}$ = 65,0 , $b_{21}$ = 64,0. L'optimisation par la méthode dite de Quasi-Newton permet de minimiser le résidu jusqu'à une valeur de 1,44e-4.

La norme utilisée est ici la norme L2.

La figure 3a représente les données synthétiques enregistrées avec 32 récepteurs, en fonction du temps exprimé en secondes (ordonnées) et de la distance (abscisses).

La figure 3b représente de façon analogue les réflexions multiples modélisées.

La figure 3c montre les données résiduelles obtenues en soustrayant des données synthétiques les multiples modélisés et corrigés conformément à l'invention en utilisant des fonctions de transfert calculées à l'aide des polynômes de Tchebycheff.

On constate une bonne disparition des réflexions multiples, sans altération du signal primaire.

EXEMPLE 2

Dans cet exemple, on a utilisé des données réelles d'un tir, qui sont représentées sur la figure 4a (distance x en abscisses, temps t exprimé en secondes en ordonnées).

Après modélisation des réflexions multiples, le point de tir a été découpé quatre fois en temps et trois fois en distance, mais le découpage en distance n'a été fait que sur les trois dernières fenêtres en temps.

Les fonctions de transfert utilisent des polynômes de TCHEBYCHEFF. Elles sont de degré 4 en t et 4 en x pour l'amplitude, et de degré 3 en t et 3 en x pour la phase.

La figure 4b représente les données résiduelles, après soustraction des multiples modélisés et adaptés des données initiales.

On constate une très bonne élimination des réflexions multiples.

L'invention apporte donc un procédé efficace pour la suppression des réflexions multiples du fond de l'eau et des "peg-legs", dans un procédé de prospection sismique marine.

## Revendications

1. Procédé de prospection sismique marine, du type dans lequel on émet une onde sismique en un point déterminé près de la surface de l'eau et l'on enregistre en fonction du temps les ondes réfléchies par les interfaces entre formations géologiques du sous-sol, à l'aide de récepteurs disposés en une pluralité d'emplacements près de la surface de l'eau, on réalise à l'aide de moyens d'un type connu utilisant l'équation des ondes un modèle mathématique M(t,x) des signaux multiples et des peg legs, on applique des modifications d'amplitude et de temps aux données ainsi calculées et on soustrait des données enregistrées pour chacun des capteurs les données calculées ainsi modifiées pour obtenir des données corrigées et l'on établit à l'aide de ces données corrigées une représentation graphique des formations géologiques du sous sol dans lesquelles s'est propagée ladite onde sismique, ce procédé étant caractérisé en ce que, pour appliquer des modifications d'amplitude et de temps aux données calculée, on applique à celles-ci des fonctions de transfert polynomiales C(t,x) tenant compte du temps t écoulé depuis l'émission de l'onde sismique et de la distance x du capteur à la source sismique, en vue d'adapter en phase et en amplitude les données calculées aux données enregistrées, pour obtenir des données modélisées adaptées $M_{adapt}$ (t,x), qui sont soustraites des données enregistrées P (t,x) pour conduire à un résidu

$$R(t,x) = P(t,x) - M_{adap}t(t,x)$$

les coefficients des fonctions de transfert étant calculés afin de minimiser, au sens des moindres carrés ou des moindres valeurs absolues, la somme sur les temps t et sur les distances x du carré ou de la valeur absolue de R(t,x).

2. Procédé selon la revendication 1, caractérisé en ce qu'on substitue aux fonctions de transfert polynomiales C(t,x) des fonctions de transfert polynomiales C'(t,x) définies à partir des polynômes de TCHEBYCHEFF $T_i(t)$ et $T_i(x)$ :

$$C'(t,x) = (T_0(t), T_1(t), \ldots, T_n(t)) \begin{pmatrix} C_{1,1} & C_{1,2} & . & . & C_{1,m} \\ C_{2,1} & C_{2,2} & . & . & . \\ . & . & . & . & . \\ . & . & . & . & . \\ C_{n,1} & . & . & . & C_{n,m} \end{pmatrix} \begin{pmatrix} T_0(x) \\ T_1(x) \\ . \\ . \\ T_m(x) \end{pmatrix}$$

3. Procédé selon l'une des revendications 1 ou 2, caractérisé en ce que l'on substitue au résidu à minimiser R(t,x) le résidu $R_p(t,x)$ défini par :

$$Rp(t,x) = R(t,x) \times [env(M(t,x))]$$

où env (   ) désigne l'enveloppe des traces en temps M(t,x) pour chaque valeur de x.

4. Application du procédé selon l'une des revendications 1, 2 ou 3, sur des sous-parties ou "fenêtres" d'un point de tir plutôt qu'au point de tir considéré dans sa globalité.

## Patentansprüche

1. Verfahren zur seismischen Prospektion auf See, bei dem eine seismische Welle an einer bestimmten Stelle nahe der Wasseroberfläche ausgesendet wird und die an den Grenzflächen zwischen geologischen Formationen des Untergrundes reflektierten Wellen mittels an einer Mehrzahl von Stellen nahe der Wasseroberfläche angeordneten Empfängern in Abhängigkeit von der Zeit aufgezeichnet werden,
mit Hilfe an sich bekannter Mittel unter Verwendung der Wellengleichung ein mathematisches Modell M(t,x) der Mehrfachsignale und peg legs (Keilbeine) erzeugt wird,
in die so errechneten Daten Änderungen von Amplitude und Zeit eingebracht und von den für jeden Empfänger aufgezeichneten Daten die errechneten, so geänderten Daten zur Gewinnung korrigierter Daten abgezogen werden
und bei dem mit Hilfe der korrigierten Daten eine graphische Darstellung der geologischen Formationen des Untergrundes erstellt wird, in denen sich die seismische Welle ausgebreitet hat,
**dadurch gekennzeichnet,**
daß zum Einbringen der Änderungen von Amplitude und Zeit in die errechneten Daten diesen polynomische Übergangsfunktionen C(t,x) eingeführt werden, welche die seit dem Aussenden der seismische Welle abgelaufene Zeit t sowie die Entfernung x des Empfängers von der seismischen Sendequelle berücksichtigen, um die errechneten Daten den aufgezeichneten Daten nach Phasenlage und Amplitude anzupassen und damit angepaßte modellisierte Daten $M_{adapt}$ (t,x) zu erhalten, die von den aufgezeichneten Daten P(t,x) abgezogen werden, um zu einem Restwert

$$R(t,x) = P(t,x) - M_{adapt}t(t,x) \text{ zu führen,}$$

wobei die Koeffizienten der Übergangsfunktionen dahingehend berechnet sind, daß die Summe über die Zeiten t und über die Entfernungen x zum Quadrat oder der Absolutwert von R(t,x) in Richtung kleinster Quadratwerte oder kleinster Absolutwerte mininiert wird.

2. Verfahren nach Anspruch 1, dadurch gekennzeichnet, daß die polynomische Übergangsfunktionen C(t,x) durch polynomische Übergangsfunktionen C'(t,x) substituiert werden, die durch TCHEBYCHEFF-Polynome $T_i(t)$ und $T_i(x)$ bestimmt sind:

$$C'(t,x) = (T_0(t), T_1(t), \ldots, T_n(t)) \begin{pmatrix} C_{1,1} & C_{1,2} & . & . & C_{1,m} \\ C_{2,1} & C_{2,2} & . & . & . \\ . & . & . & . & . \\ . & . & . & . & . \\ C_{n,1} & . & . & . & C_{n,m} \end{pmatrix} \begin{pmatrix} T_0(x) \\ T_1(x) \\ . \\ . \\ T_m(x) \end{pmatrix}$$

3. Verfahren nach Anspruch 1 oder 2, dadurch gekennzeichnet, daß der zu minimierende Restwert R(t,x) durch den Restwert $R_p(t,x)$ substituiert wird, der bestimmt ist durch

$$R_p(t,x) = R(t,x) \times [env(M(t,x))],$$

worin env (     ) für die Einhüllende der zeitlichen Kurvenverläufe M(t,x) für alle x-Werte steht.

4. Anwendung des Verfahrens nach einem der vorhergehenden Ansprüche 1, 2 oder 3 auf Teilbereiche oder "Fenster" eines Sendepunktes anstatt auf den Sendepunkt unter Einbeziehung seines gesamten Sende-Umfanges.

## Claims

1. Method of marine seismic prospection, of the type in which a seismic wave is emitted at a specified point near the surface of the water and the waves reflected by the interfaces between geological subsoil formations are recorded as a function of time with the aid of receivers placed at a plurality of locations near the surface of the water, a mathematical model M(t,x) of the multiple signals and peg legs is produced with the aid of means of a known type using the wave equation, amplitude and time modifications are applied to the data thus calculated and for each of the sensors the calculated data thus modified are subtracted from the recorded data to obtain corrected data and a graphical representation of the geological subsoil formations in which the said seismic wave was propagated is compiled with the aid of these corrected data, this method being characterised in that, in order to apply amplitude and time modifications to the calculated data, polynomial transform functions C(t,x) which take into account the elapsed time t since the emission of the seismic wave and the distance x from the sensor to the seismic source are applied to these data, with a view to fitting the calculated data to the recorded data in phase and in amplitude, in order to obtain fitted modelled data $M_{fit}(t,x)$, which are subtracted from the recorded data P(t,x) to yield a residual

$$R(t,x) = P(t-x) - M_{fit}(t-x)$$

the coefficients of the transform functions being calculated so as to minimise, in the least squares or least absolute values sense, the sum over the times t and over the distances x of the square or of the absolute value of R(t,x).

2. Method according to Claim 1, characterised in that the polynomial transform functions C(t,x) are replaced by polynomial transform functions C'(t,x) defined from TCHEBYCHEFF polynomials $T_i(t)$ and $T_i(x)$:

$$C'(t,x) = (T_0(t), T_1(t), \ldots, T_0(t)) \begin{pmatrix} C_{1,1} & C_{1,2} & . & . & C_{1,m} \\ C_{2,1} & C_{2,2} & . & . & . \\ . & . & . & . & . \\ . & . & . & . & . \\ C_{n,1} & . & . & . & C_{n,m} \end{pmatrix} \begin{pmatrix} T_0(x) \\ T_1(x) \\ . \\ . \\ T_m(x) \end{pmatrix}$$

3. Method according to one of Claims 1 or 2, characterised in that the residual to be minimised R(t,x) is replaced by the residual $R_p(t,x)$ defined by:

$$R_p(t,x) = R(t,x) \times [env(M(t,x))]$$

where env (     ) designates the envelope of the time traces M(t,x) for each value of x.

**4.** Application of the method according to one of Claims 1, 2 or 3, over sub-portions or "windows" of a firing point rather than to the relevant firing point as a whole.

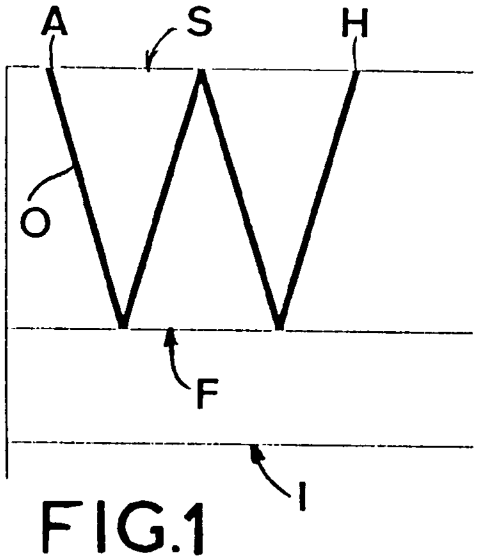


FIG.1

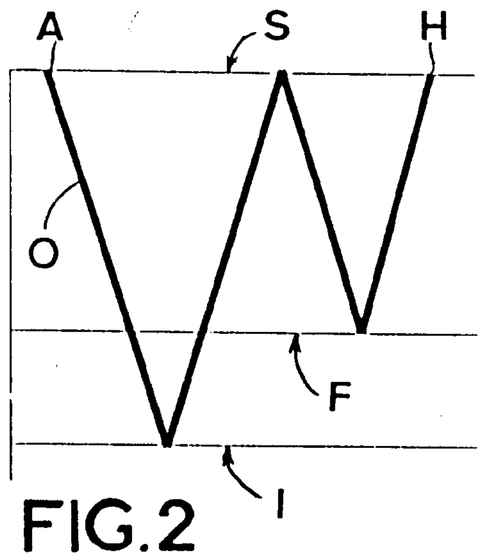


FIG.2

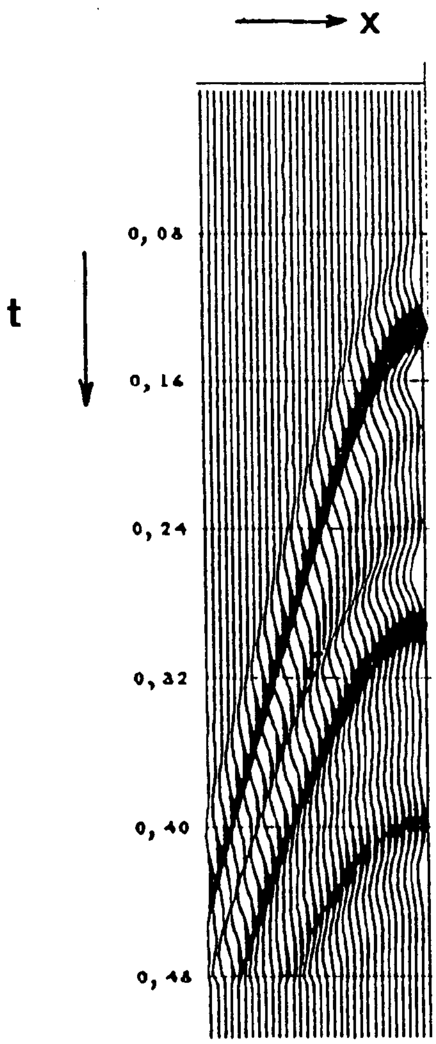


FIG.3a

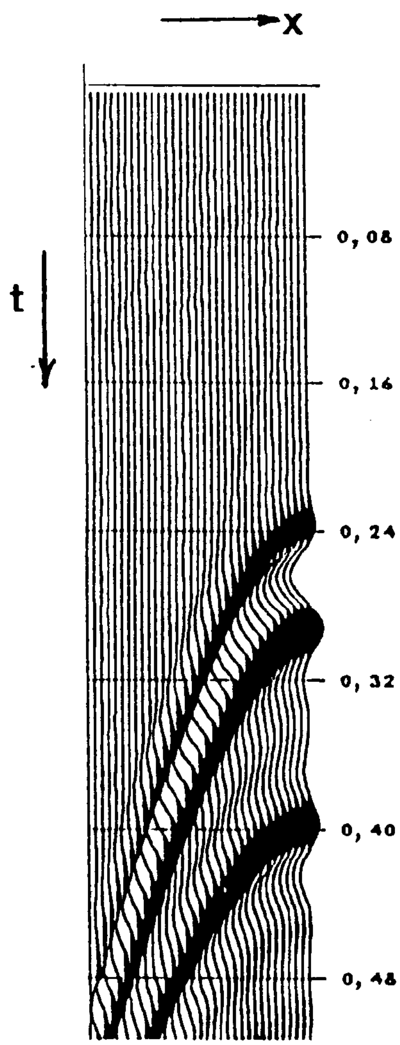


FIG.3b

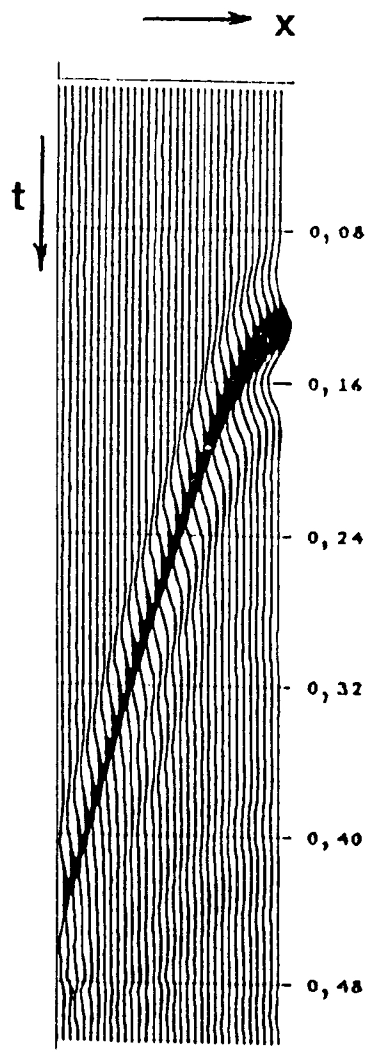


FIG.3c

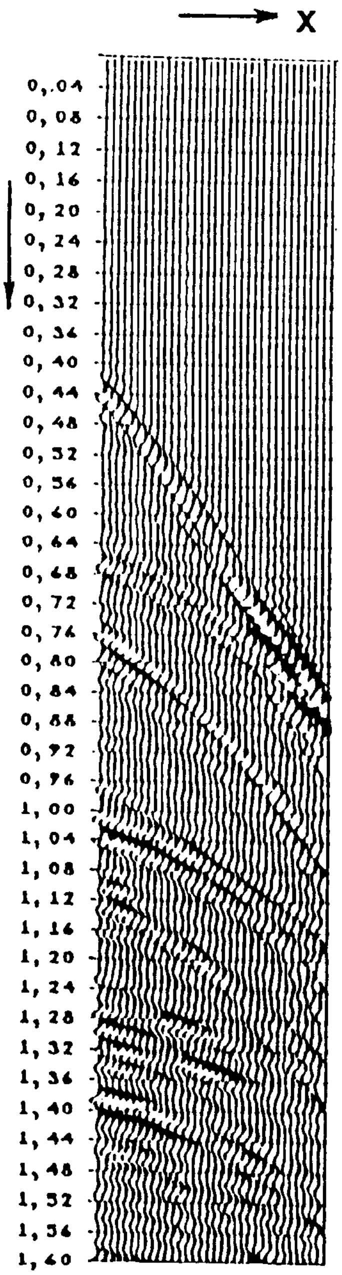


FIG.4a

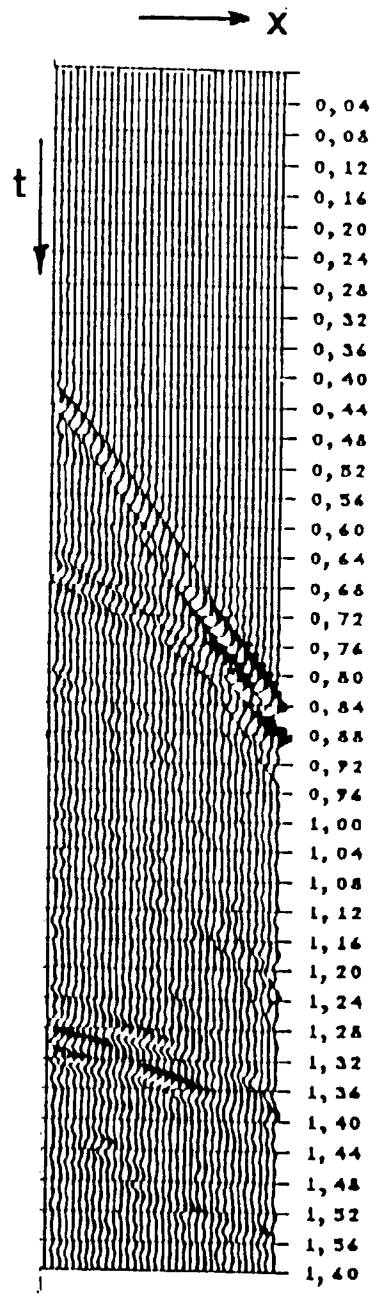


FIG.4b